# EUROPEAN PATENT APPLICATION

(11) **EP 2 579 154 A1**
(43) Date of publication of application: **10.04.2013**
(21) Application number: 12162437.3
(22) Date of filing: 30.03.2012
(51) Int. Cl.: G06F 9/455

(54) **System and method for controlling a device which produces and executes an application**

(30) Priority: 05.10.2011 KR 20110101341
(71) Applicant: Samsung Electronics Co., Ltd., Suwon-si, Gyeonggi-do, 443-742 (KR)
(72) Inventor: Lee, Tae-dong, Gyeonggi-do (KR); Kim, Ki-ho, Gyeonggi-do (KR)
(74) Representative: Bruce, Alexander Richard Henry

(57) **Abstract**

A method for controlling a server is provided. The method includes controlling a server which communicates with a device producing an application using an application production tool, and includes receiving an operation source which corresponds to an application produced by the device, performing emulation regarding the application using the received operation source, and transmitting the result of the emulation execution to an external device.

## Description

Aspects of the present invention relate to a device, a server, a system, and a controlling method, and more particularly, to a device which is used for producing an application, a server, a system, and a controlling method.

As technologies of computer, electronics, and communications have continued to develop rapidly, various wireless communication services have been provided which use a wireless communication network.

Wireless communication services have been expanded beyond just providing a voice communication service to providing various multi-media services.

Recently, wireless internet services have used a wireless internet platform method which downloads and uses an application program.

In order to provide various additional services through such a wireless internet platform, mobile communication companies which provide a wireless internet platform distribute, to application developers, a Software Development Kit (SDK) for writing a program code suitable for the corresponding platform, so that the developers may develop various applications using the SDK.

However, the type of Operating System (OS) supported by a conventional SDK is very limited and thus, developing applications is not easy in an apparatus where the corresponding OS is not supported.

In addition, an emulator which performs emulation with respect to an application of a prior art SDK should execute and analyze the application whenever its scanning engine examines the application. However, this consumes a considerable amount of resources. Specifically, not only does it take up a lot of space in a developing apparatus, it also slows down the overall speed.

Aspects of the present inventive concept relate to a device which produces and executes an application in a separate entity, a server, a system and a controlling method thereof. A method for controlling a server which communicates with a device producing an application using an application production tool, according to an exemplary embodiment, includes receiving an operation source which corresponds to an application produced by the device, performing emulation regarding the application using the received operation source, and transmitting the result of the emulation execution to an external device.

The method may further include receiving a request for transmission of the emulation execution result from the external device, and performing the emulation may include determining an emulator which corresponds to characteristics of an external device which transmits the transmission request from among at least one or more pre-stored emulators.

The transmitting may include capturing an image of the emulation execution on a real-time basis and streaming the captured image to the external device.

The receiving an operation source may include receiving a plurality of operation sources which correspond to an application produced by each of a plurality of devices, and the performing an emulation may include performing emulation regarding each of the plurality of operation sources using an emulator which corresponds to characteristics of each of the plurality of operation sources.

The transmitting may respectively include capturing an image of emulation execution regarding each of the plurality of operation sources and streaming the captured image to a corresponding device.

The application production tool may be a Software Development Kit (SDK).

The external device may be at least one of a device which transmits the operation source and another external device.

A method for controlling a device which communicates with a server performing emulation of an application, according to an exemplary embodiment, includes producing an application using an application production tool, transmitting an operation source which corresponds to the produced application to a server, and receiving result of emulation execution regarding the operation source from the server and displaying the emulation execution result.

The displaying may include receiving streaming data in which an image of the emulation execution regarding the operation source is captured on a real-time basis from the server and displaying the image.

A server which communicates with a device producing an application using an application production tool, according to an exemplary embodiment, includes a communication unit which receives an operation source which corresponds to an application produced by the device, an emulation unit which performs emulation regarding the application using the received operation source, and a control unit which transmits the emulation execution result to an external device.

The control unit, in response to a request for transmission of the emulation execution result being received from the external device, may determine an emulator which corresponds to characteristics of an external device which transmits the transmission request and performs the emulation using an emulator.

The control unit may capture the emulation execution image on a real-time basis and stream the captured image to the external device.

The control unit, in response to a plurality of operation sources which correspond to an application produced by each of a plurality of devices are received, may perform emulation regarding each of the plurality of operation sources by using an emulator which corresponds to characteristics of each of the plurality of operation sources.

The control unit may respectively capture an emulation execution image regarding each of the plurality of operation sources and stream the captured image to a corresponding device.

The application production tool may be a Software Development Kit (SDK).

The external device may be at least one of a device which transmits the operation source and another external device.

A device which communicates with a server performing emulation regarding an application, according to an exemplary embodiment, includes a communication unit which communicates with a server, an application generating unit which produces an application using an application production tool, a control unit which controls an operation source which corresponds to the produced application to the server and receive the result of emulation execution regarding the operation source from the server, and a display unit which displays the received emulation execution result.

The display unit may receive streaming data in which an emulation execution image regarding the operation source is captured on a real-time basis from the server and display the image.

A method of controlling a system including a device producing an application using an application production tool and a server performing emulation regarding an application produced by the device, according to an exemplary embodiment, includes producing an application using an application production tool and transmitting to a server an operation source which corresponds to the produced application, by the device, performing emulation of an operation source which corresponds to an application produced by the server with regard to the application using a received operation source, and transmitting the emulation execution result to the device, by the server, and the device receiving the result of the emulation execution regarding the operation source from the server and displaying the result.

A system according to an exemplary embodiment, includes a device which transmits to the server an operation source which corresponds to an application produced using an application tool, receives from the server the result of emulation execution regarding the operation source and displays the emulation execution result, and a server which receives an operation source which corresponds to an application produced by the device, performs emulation regarding the application using the received operation source, and transmits the emulation execution result to an external device.

Another aspect of the exemplary embodiments provides a method for controlling a server which communicates with a device producing an application, the method including: receiving an operation source, performing an emulation execution using the received operation source, and transmitting the result of the emulation execution.

A further aspect of the exemplary embodiments includes a server which communicates with a device producing an application, the server including: a communication unit that receives an operation source, an emulation unit which performs emulation using the received operation source, and a control unit which transmits the result of the emulation execution.

These and/or other aspects and advantages of the inventive concept will become apparent and more readily appreciated from the following description of the embodiments, taken in conjunction with the accompanying drawings, of which:
FIG. 1 is a schematic view for explaining a configuration of an application development system, according to an exemplary embodiment;
FIG. 2 is a block diagram illustrating a configuration of a device, according to an exemplary embodiment;
FIG. 3 is a block diagram illustrating configuration of a server, according to an exemplary embodiment;
FIG. 4 is a view for explaining a correlation between a server and a device, according to another exemplary embodiment;
FIG. 5 is a schematic view illustrating a correlation of operation between a server and a device, according to another exemplary embodiment;
FIG. 6 is a flowchart to explain a method of controlling a device, according to an exemplary embodiment;
FIG. 7 is a flowchart to explain a method of controlling a server, according to an exemplary embodiment; and
FIG. 8 is a sequence view for explaining a correlation of operation between a device and a server, according to an exemplary embodiment.

Reference will now be made in detail to the exemplary embodiments of the present inventive concept, examples of which are illustrated in the accompanying drawings, wherein like reference numerals refer to like elements throughout. The embodiments are described below, in order to explain the present inventive concept by referring to the figures.

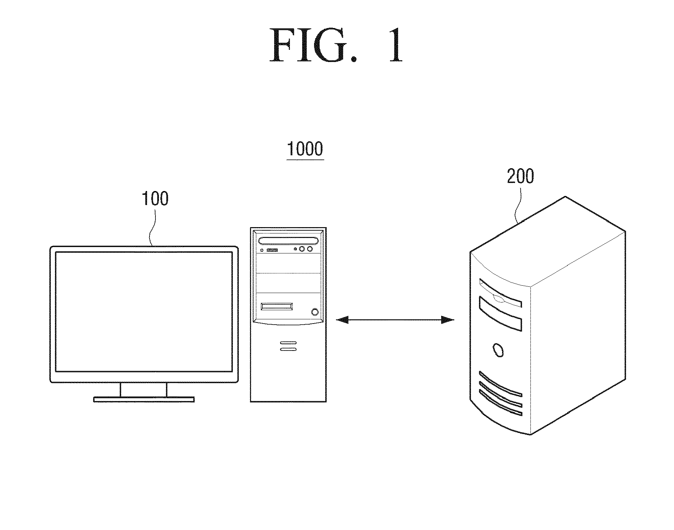

FIG. 1 is a schematic view for explaining a configuration of an application development system, according to an exemplary embodiment.

Referring to FIG. 1, an application development system 1000 includes a device 100 and a server 200.

The application development system 1000 may produce a platform or an application which is operable in an Operating System (OS), that is, an executable file using an application production tool and emulate the produced application. Herein, the application production tool may be a Software Development Kit (SDK).

The SDK generally refers to a group of development tools which allow the production of an application program for a certain software package, a software framework, a hardware platform, a computer system, a game device, an operating system, etc. Such an SDK is distributed by a platform developer or an OS developer to application developers and may be downloaded, for example, from a server of the platform developer or from the OS developer. For instance, a SDK may be a direct X SDK, a java SDK, and an android SDK, etc.

The device 100 produces an application using an application production tool, that is, an SDK. In other words, the device 100 produces an application with an editor module of a conventional SDK.

In addition, the device 100 may transmit an operation source of the produced application to the server 200. The device 100 may receive an emulation result regarding the corresponding application from the server 200, and may display the emulation result on a screen.

The server 200 receives an operation source regarding the produced application from the device 100 and performs emulation.

Specifically, the server 200 has an emulator with a platform of a conventional SDK and receives an operation source regarding the produced application from the device 100 so that the server 200 generates a virtual environment or a virtual hardware image to execute the application indirectly through the corresponding virtual hardware.

Accordingly, the server 200 should be configured to process general commands to process an application in the same way as an operation using an actual CPU. The server 200 should record and trace all of the memory addresses which have been changed when an application is executed, and may provide all of the logical and physical memory addresses.

In addition, the server 200 may transmit the emulation result to the device 100 according to a request from the device 100 or according to predetermined conditions.

For example, the server 200 may be realized as a cloud server using a cloud computing technology. Herein, the cloud computing refers to an internet-based computing technology and includes a web-based software service which calls upon a program on an internet-based utility data server to a computer, a television, or a mobile phone whenever necessary and uses the program. That is, the server 200 may be configured to have a cloud emulator which is applicable to various development devices. A detailed description regarding the cloud computing will not be provided.

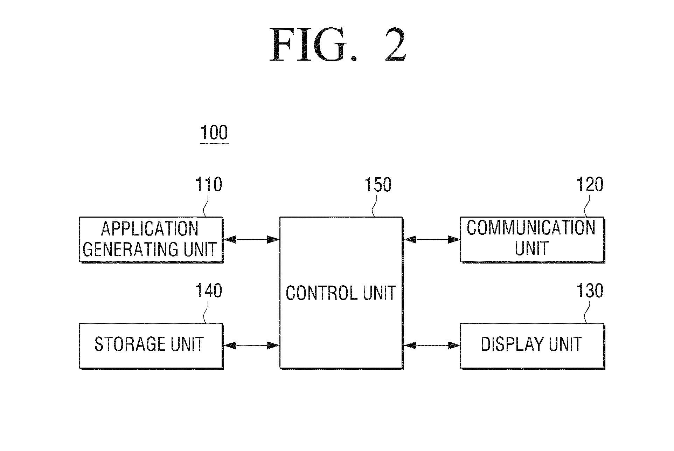

FIG. 2 is a block diagram illustrating configuration of the device 100, according to an exemplary embodiment.

Referring to FIG. 2, the device 100 includes an application generating unit 110, a communication unit 120, a display unit 130, a storage unit 140, and a control unit 150.

The device 100 may be realized as a PC representatively, but is not limited thereto. The device 100 may be realized as various devices such as a smart phone which can download an application development tool and develop an application.

The application generating unit 110 produces an application using an application source.

Specifically, the application generating unit 110 may produce and modify an application using various application sources provided through a SDK. For example, the application generating unit 110 may generate and modify an application in the form of a source code.

The communication unit 120 may support communication with the server 200.

Specifically, the communication unit 120 may transmit an operation source of an application generated in the server (FIG. 1, 200) through the application generating unit 110 to the server 200. In this case, the operation source of an application transmitted to the server 200 may be an operation source of an application which is being produced or has already been produced.

In addition, the communication unit 120 may receive from server 200 an emulation result which corresponds to an operation source of an application transmitted to the server 200.

Specifically, the communication unit 120 may receive a captured image of emulation execution on a real-time basis in the form of streaming data. Herein, capturing an execution image means encoding an execution image for transmission.

The display unit 130 displays the emulation result received from the server 200.

Specifically, the display unit 130 may display an emulation image regarding an application streamed from the server 200.

The storage unit 140 may store various sources necessary to produce an application. For example, the storage unit 140 may store a SDK which is downloaded from a specific platform developer or an OS developer. In particular, the storage unit 140 may store programs related to an editing function, from among SDK functions.

In addition, the storage unit 140 may store various programs necessary to perform operations of the device 100.

The control unit 150 controls the overall functions of the device 100. In particular, the control unit 150 may transmit to server 200 an operation source of an application generated through the application generating unit 110, in accordance with a predetermined event. Herein, the predetermined event may be a user command, but is not limited thereto. The predetermined event may be the event of reaching a predetermined period.

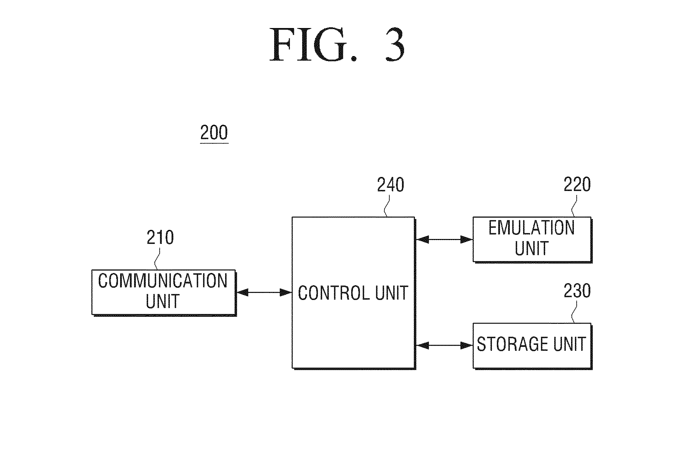

FIG. 3 is a block diagram illustrating configuration of a server, according to an exemplary embodiment.

Referring to FIG. 3, the server 200 includes a communication unit 210, an emulation unit 220, a storage unit 230, and a control unit 240.

The communication unit 210 receives, from external device 100, an operation source which corresponds to an application which is being developed or already developed.

In addition, the communication unit 210 transmits emulation result regarding an operation source received in accordance with a predetermined event to the corresponding external device (FIG. 1, 100).

The emulation unit 220 performs emulation regarding an application using an operation source regarding an application received through the communication unit 210. Accordingly, the emulation unit 220 may have an emulator with a platform.

Specifically, the emulation unit 220 may perform emulation regarding an application by using its emulator for performing emulation with actual hardware in a virtual environment.

In this case, the emulation unit 220 may have various kinds of emulators which corresponding to various platforms or OS. In addition, the emulation unit 220 may have an emulator having various versions, even with the same platform or OS.

Accordingly, the emulation unit 220 may perform emulation by using an emulator which corresponds to a received operation source.

The storage unit 230 may store programs which correspond to the above-mentioned various emulators.

The control unit 240 controls overall operations of the server 200. In particular, if a predetermined event occurs, the control unit 240 may determine an emulator which corresponds to an operation source regarding a received application through the communication unit 210 and control the emulation unit 220 to perform emulation by the corresponding emulator. Herein, the predetermined event may be receiving a signal having a request for an emulation result from the device 100 or another client device. For example, if a request for transmission of an emulation result is received from the device 100 or another client device, the control unit 240 may generate an instance and perform emulation regarding a received application, by determining a corresponding execution platform.

In addition, the control unit 240 captures an emulation execution image of an application through the emulation unit 220 and transmits the captured image to the corresponding device 100 or to another client device.

However, this is only an example, and the above operation may be performed at a predetermined period.

In addition, the control unit 240 may stream a captured execution image to the device 100, on a real-time basis.

In addition, in response to a plurality of operation sources which correspond to an application produced by each of a plurality of devices being received, the control unit 240 may perform an emulation regarding each of the plurality of operation sources, by using an emulator which corresponds to each of the plurality of operation sources.

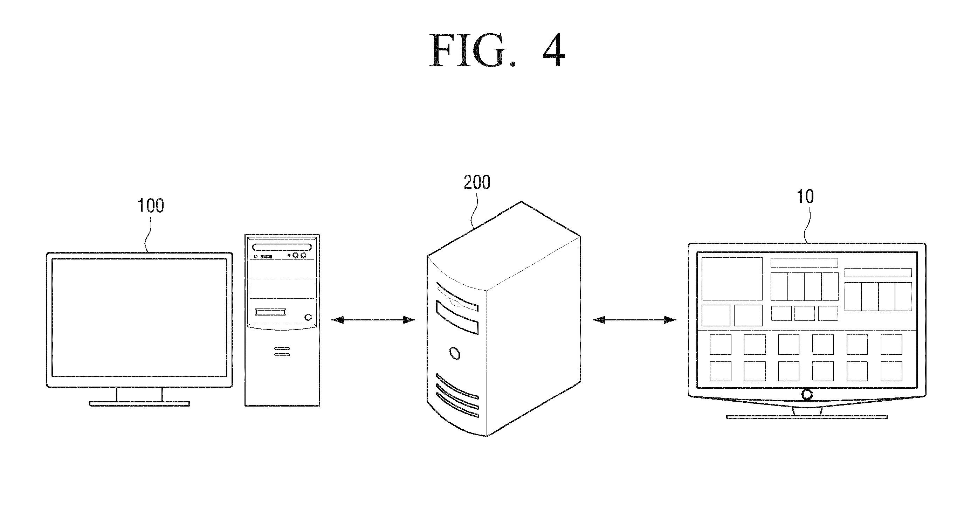

FIG. 4 is a view for explaining a correlation between a server and a device, according to another exemplary embodiment.

In the above explanation regarding FIGS. 1 to 3, an application transmits an operation source from the specific device 100 to the server 200, and an emulation result regarding the operation source received from the server 200, is transmitted to the corresponding device 100.

However, according to another exemplary embodiment, the emulation result of the server 200 may be transmitted to another device 10 rather than to the device 100 to which the operation source is transmitted.

In other words, a user may check the emulation result in another device 10 such as a television and a smart phone rather than a PC, even though an application has been developed in the PC.

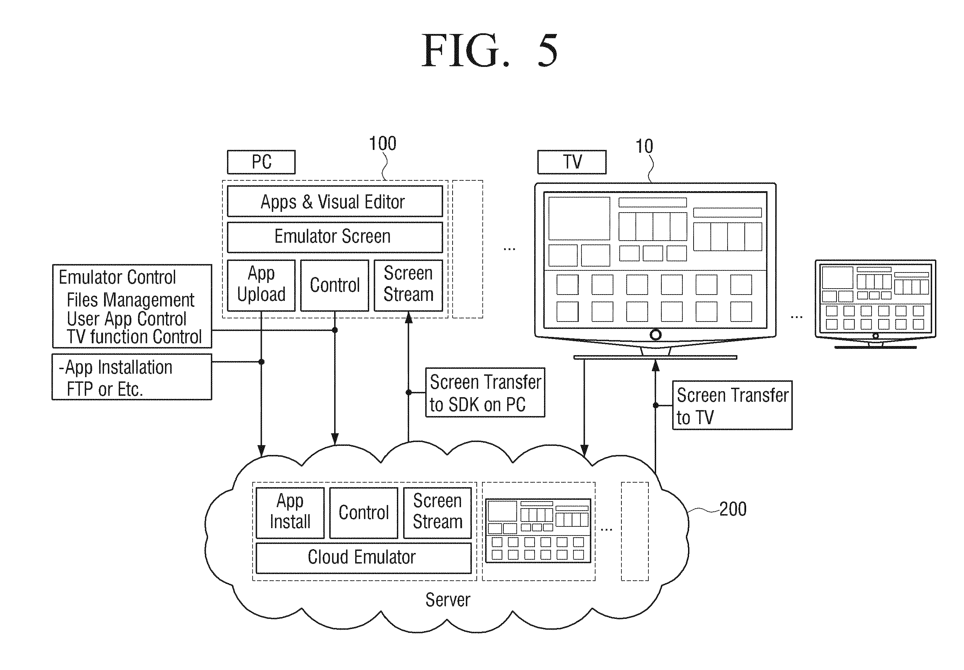

FIG. 5 is a schematic view illustrating a correlation of operation between a server and a device, according to another exemplary embodiment.

As illustrated in FIG. 5, in response to an application being developed in an environment of a PC 100 which cannot be supported by a SDK, only a basic development environment, i.e., an editing function, may be provided in the PC, and an emulation regarding the application may be performed in a server. In this case, an emulation image may be provided through a screen in the PC. Accordingly, the PC 100 may have a module for transmitting an application to the server 200 and managing the application, and a module for receiving streaming data from the server 200.

Meanwhile, the server 200 may be configured to capture an emulation environment on a real-time basis and transmit the captured image to another device such as the PC 100 or the TV 10.

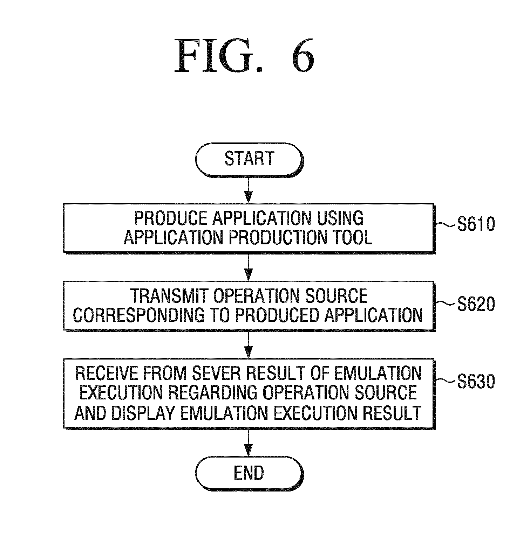

FIG. 6 is a flowchart explaining a method of controlling a device, according to an exemplary embodiment.

According to a method for controlling a device which communicates with a server performing emulation regarding an application illustrated in FIG. 6, first of all, an application is produced using an application production tool (S610).

Subsequently, an operation source which corresponds to the produced application is transmitted to a server (S620).

The emulation result regarding the transmitted operation source is received from the server and displayed (S630).

Meanwhile, in step S630, data of a captured image of emulation execution regarding an operation source, may be streamed from a server and displayed.

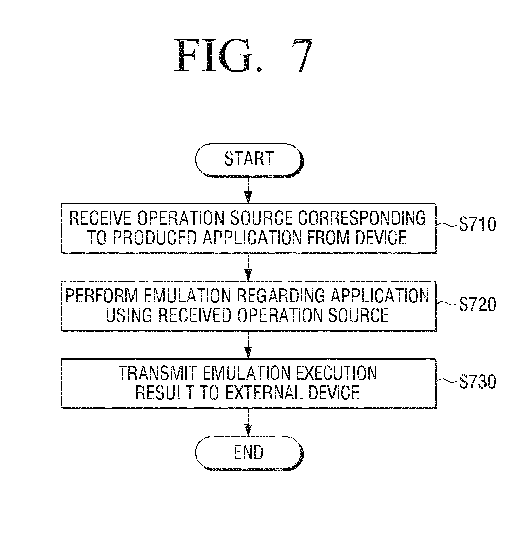

FIG. 7 is a flowchart for explaining a controlling method of a server, according to an exemplary embodiment.

According to a method for controlling a server which communicates with a device producing an application using an application production tool illustrated in FIG. 7, first of all, an operation source which corresponds to an application produced by the device is received (S710). Herein, the application production tool may be a SDK.

Subsequently, emulation of the application is performed using the received operation source (S720).

The emulation execution result is transmitted to an external device (S730). Herein, the external device may be at least one of a device which transmits the operation source, and another external device.

Meanwhile, in step S720, in response to a request for transmission of the emulation execution result being received from an external device, an emulator which corresponds to the characteristics of an external device which sends the request may be determined from among at least one or more of predetermined pre-stored emulators, and emulation may be performed using the determined emulator.

In addition, in step S730, the emulation execution result may be transmitted to an external device.

Specifically, in step S730, an emulation execution image is captured on a real-time basis and the captured image may be streamed to an external device.

Meanwhile, in response to a plurality of operation sources corresponding to an application produced by each of a plurality of devices being received, emulation regarding each of the plurality of operation sources may be performed using an emulator which corresponds to the characteristics of each of the plurality of operation sources.

In this case, an emulation execution image regarding each of the plurality of operation sources may be respectively captured on a real-time basis and the captured image may be streamed to a corresponding device.

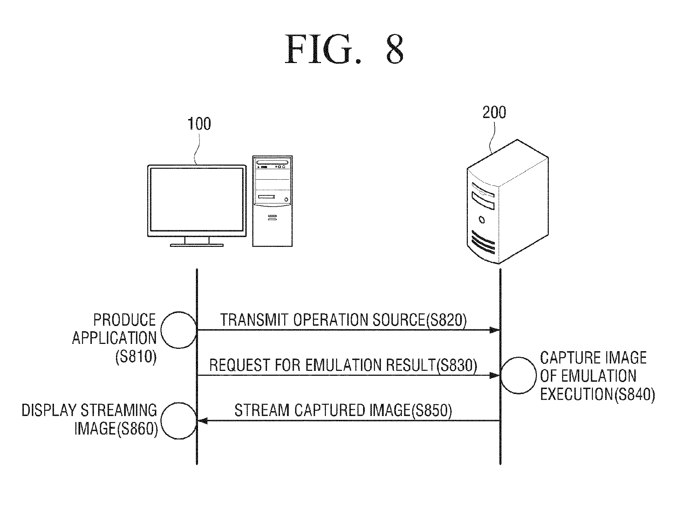

FIG. 8 is a sequence view for explaining a correlation of operation between a device and a server, according to an exemplary embodiment.

The device 100 may produce an application using a SDK, that is, an application production tool (S810) and transmit an operation source which corresponds to the produced application to the server 200 (S820).

Subsequently, in response to the device 100 requesting the server 200 to send an emulation result (S830), the server 200 may perform emulation regarding an operation source regarding a corresponding application, and capture an emulation image (S840).

Subsequently, the server 200 may stream the captured image to the device 100 (S850).

In this case, the device 100 may display the received streaming image (S860).

Meanwhile, step S830 may be omitted, depending on the circumstances, and the server 200 may transmit emulation result in response to a predetermined event occurring even without a request for the emulation result from the device 100.

Accordingly, even in response to an application being developed in an OS which is not supported by a specific SDK (particularly, emulator), an application developer may emulate the corresponding application by transmitting it to a server and then receive the emulation result. Therefore, the application developer may view an application execution screen regardless of the type of OS.

In addition, the volume of space taken up by an emulator in a development device may be reduced, and the deterioration of performance of a development device due to an emulator may be prevented.

In addition, the present invention may include a computer readable recording medium including a program for executing the above-mentioned device, server and method of controlling the system. The computer readable recording medium includes all types of recording devices which store data which can be read by a computer system. Examples of the computer readable recording medium include a ROM, a RAM, a CD-ROM, a magnetic tape, a floppy disk, an optical data storage device, etc. The computer readable recording medium can also be distributed over network coupled with computer systems so that a computer readable code is stored and executed in a distributed fashion.

Although a few embodiments of the present invention have been shown and described, it would be appreciated by those skilled in the art that changes may be made in this embodiment without departing from the principles of the invention, the scope of which is defined in the claims.

## Claims

1. A method for controlling a server which communicates with a device producing an application using an application production tool, the method comprising:
receiving an operation source which corresponds to an application produced by the device;
performing emulation regarding the application using the received operation source; and
transmitting a result of the emulation execution to an external device.

2. The method as claimed in claim 1, further comprising:
receiving a request for transmission of the emulation execution result from the external device,
wherein the performing the emulation comprises determining an emulator which corresponds to characteristics of an external device which transmits the transmission request from among at least one or more pre-stored emulators.

3. The method as claimed in claim 1 or claim 2,
wherein the transmitting comprises:
capturing an image of the emulation execution on a real-time basis; and
streaming the captured image to the external device.

4. The method as claimed in claim 3, wherein the receiving an operation source comprises receiving a plurality of operation sources which correspond to an application produced by each of a plurality of devices,
wherein the performing an emulation comprises performing emulation regarding each of the plurality of operation sources using an emulator which corresponds to characteristics of each of the plurality of operation sources.

5. The method as claimed in claim 4, wherein the transmitting comprises:
capturing an image of emulation execution regarding each of the plurality of operation sources; and
streaming the captured image to a corresponding device, respectively.

6. The method as claimed in claim 1, wherein the application production tool is a Software Development Kit (SDK).

7. The method as claimed in one of claim 1 to claim 6, wherein the external device is at least one of a device which transmits the operation source and another external device.

8. A method for controlling a device which communicates with a server performing emulation of an application, the method comprising:
producing an application using an application production tool;
transmitting an operation source which corresponds to the produced application to a server; and
receiving a result of emulation execution regarding the operation source from the server and displaying the emulation execution result.

9. The method as claimed in claim 8, wherein the displaying comprises receiving streaming data in which an image of emulation execution regarding the operation source is captured on a real-time basis from the server and displaying the image.

10. A server which communicates with a device producing an application using an application production tool, the server comprising:
a communication unit which receives an operation source which corresponds to an application produced by the device;
an emulation unit which performs emulation regarding the application using the received operation source; and
a control unit which controls to transmit the emulation execution result to an external device.

11. The server as claimed in claim 10, wherein the control unit, in response to a request for transmission of the emulation execution result being received from the external device, determines an emulator corresponding to characteristics of an external device which transmits the transmission request and performs the emulation using a determined emulator.

12. The server as claimed in claim 10 or claim 11, wherein the control unit captures the emulation execution image on a real-time basis and stream the captured image to the external device.

13. The server as claimed in claim 12, wherein the control unit, in response to a plurality of operation sources corresponding to an application produced by each of a plurality of devices are received, performs emulation regarding each of the plurality of operation sources using an emulator corresponding to characteristics of each of the plurality of operation sources.

14. The server as claimed in claim 13, wherein the control unit captures an image of emulation execution regarding each of the plurality of operation sources and streams the captured image to a corresponding device, respectively.

15. A device which communicates with a server performing emulation regarding an application, the device comprising:
a communication unit which communicates with a server;
an application generating unit which produces an application using an application production tool;
a control unit which controls to transmit an operation source which corresponds to the produced application to the server and receive a result of emulation execution regarding the operation source from the server; and
a display unit which displays the received emulation execution result.
